# EUROPÄISCHE PATENTSCHRIFT

(11) **EP 0 640 290 B1**
(45) Veröffentlichungstag und Bekanntmachung des Hinweises auf die Patenterteilung: **29.12.1997**
(21) Anmeldenummer: 94111678.2
(22) Anmeldetag: 27.07.1994
(51) Int. Cl.: A22C 17/04

(54) **Separator zum Gewinnen des Restfleisches von Knochensträngen**
Separator for recovering adhering meat from bone-strands
Séparateur pour l'obtention de la viande restante de cardons d'os

(30) Priorität: 27.08.1993 DE 4328627
(43) Veröffentlichungstag der Anmeldung: 01.03.1995
(73) Patentinhaber: NORDISCHER MASCHINENBAU RUD. BAADER GMBH + CO KG, 23560 Lübeck (DE)
(72) Erfinder: McFarland, Archie Paul, Salt Lake City, Utah 84118 (US); Richartz, Sigurd, D-23556 Lübeck (DE)

(56) Entgegenhaltungen:
- EP-A- 0 179 973
- EP-A- 0 422 394
- DE-A- 2 032 774
- DE-A- 4 116 476

## Beschreibung

Die Erfindung betrifft einen Separatorzur Durchführung eines Verfahrens zum Gewinnen des Restfleisches von den Knochen von Karbonadensträngen geschlachteter Warmblüter, insbesondere von Schweinen, mit einer umlaufend angetriebenen einseitig offenen Hohltrommel mit perforierter Mantelfläche, einem elastischen, endlosen Preßband, welches mit seiner Außenfläche die Hohltrommel auf einem Teil ihres Umfanges umschlingt und einen Einzugkeil für das Preßgut und unter Wirkung von Anpreßmitteln eine Preßzone bildend geführt ist, sowie mit einer Ausräumeinrichtung im Innenraum der Hohltrommel und einer deren äußerer Mantelfläche zugeordneten Abstreifvorrichtung.

Die vorerwähnten Karbonadenstränge fallen bei der Zerlegung von insbesondere Schweinen an und umfassen einen zusammenhängenden Knochenstrang von ca. 20 Brustwirbeln der Wirbelsäule, die in einem vorausgehenden Arbeitsgang mittels einer Säge in der Symmetrieebene des Tierkörpers gespalten wurde, und von der die Rippen und Wirbelfortsätze jeweils unter Belassen von kurzen Stümpfen an den Wirbelkörpern abgetrennt sind. Weiter umfassen die Karbonadenstränge einen Fleischstrang, der im Verbund mit dem Knochenstrang z. B. als "Kassler" gehandelt wird und ausgebeint als Ausgangsprodukt mannigfaltiger Produkte, wie z. B. "Lachsschinken" dient. Das Ausbeinen dieser Karbonadenstränge bzw. das Freischneiden des Knochenstranges erfolgt üblicherweise in Handarbeit und erzeugt einen Knochenstrang, der insbesondere in dem Kehlbereich zwischen dem Wirbelkörper und beidseits des Rippenstumpfes mit wertvollem Restfleisch behaftet ist, das aber aus Kostengründen einer manuellen Gewinnung nicht zugänglich ist.

Aus der DE- A - 41 16 476 ist ein Separator zum Trennen von miteinander vermischten Stoffen unterschiedlicher Fließfähigkeit bekannt, der mit einer perforierten zylindrischen Hohltrommel ausgerüstet ist, die auf einem Teil ihres Umfangs von einem elastischen Preßband unter Bildung eines Einzugkeils umschlungen wird, in den das Preßgut aufgegeben wird.

Derartige Bandseparatoren sind in der Lage, Fleisch aus einem Gemisch von Sehnen, Häuten, Knorpel und kleineren Knochenpartikeln zu trennen, eine Bearbeitung von Restfleisch tragenden Knochensträngen ist damit jedoch nicht möglich.

Es ist die Aufgabe der Erfindung, eine Einrichtung anzugeben, mit welcher eine maschinelle Gewinnung dieser Fleischteile möglich ist.

Diese Aufgabe wird erfindungsgemäß durch einen Separator der eingangs beschriebenen Bauart gelöst, bei dem die Hohltrommel mindestens eine deren Mantelfläche unterbrechende und sich radial umlaufend erstreckende Nut aufweist, deren Querschnitt der Querschnittsform des Knochenstranges der zu bearbeitenden Karbonadenstränge im wesentlichen entspricht, wobei die Mantelfläche der Hohltrommel wenigstens im Bereich der Nut von Perforationen durchsetzt ist.

Mit einem derartig ausgestalteten Separator ist es möglich, das besagte Restfleisch unter weitestgehender Vermeidung von Knochensplittern in der bekannten Weichseparator-Qualität, d. h. in Form eines hochwertigen Bräts zu gewinnen.

Dieses Brät sammelt sich im Inneren der Hohltrommel und ist von dort nach außen zu befördern. Dies kann mit einer bekannten Ausräumeinrichtung in Form einer in den Innenraum der Hohltrommel von deren offener Seite her einführbaren Förderschnecke mit mindestens einem schraubenförmig gewundenen, der Innenkontur der Hohltrommel angepaßten Steg geschehen wobei jedoch der vorausweisende Teil des Steges gegen die Drehrichtung der Hohltrommel in einen Hüllkreis bringbar ist, dessen Durchmesser kleiner ist als der kleinste Innendurchmesser der Hohltrommel. Der Vorteil dieser Ausführung liegt dabei insbesondere darin, daß die Ausräumeinrichtung einerseits ganzflächig wirksam sein kann, d. h. das abgepreßte Brät zügig und schonend und damit qualitätserhaltend ausgetragen wird, und andererseits zum Zwecke der Reinigung leicht aus der Hohltrommel entnehmbar ist.

Voraussetzung für eine einwandfreie Funktion der Einrichtung ist, daß die zu bearbeitenden Knochenstränge in bestimmter Lage und Ausrichtung zugeführt werden. Um dies sicherzustellen, kann unmittelbar vor dem Einzugkeil eine Leitvorrichtung zum positonsgenauen Zuführen der Knochenstränge in bezug auf die Lage der Nut in der Mantelfläche der Hohltrommel angeordnet sein.

Der erfindungsgemäße Separator wird nachstehend anhand eines in der Zeichnung dargestellten Ausführungsbeispiels näher erläutert. Es zeigen
- Fig. 1: eine vereinfachte perspektivische Gesamtansicht der Einrichtung,
- Fig. 2: einen Radialschnitt durch die Hohltrommel aus Fig. 1,
- Fig. 3: eine vereinfachte Darstellung der Abstreifvorrichtung in teilweiser Explosionsdarstellung,
- Fig. 4: eine perspektivische Ansichtdarstellung der Ausräumeinrichtung
- Fig. 5: eine Seitenansicht der Ausräumereinrichtung nach Fig. 4,
- Fig. 6: eine Stirnansicht der Einrichtung nach Fig. 4
- Fig. 7: eine Teildraufsicht auf den Endbereich der Ausräumeinrichtung nach Fig.3
- Fig. 8: eine perspektivische Ansicht der Leitvorrichtung.

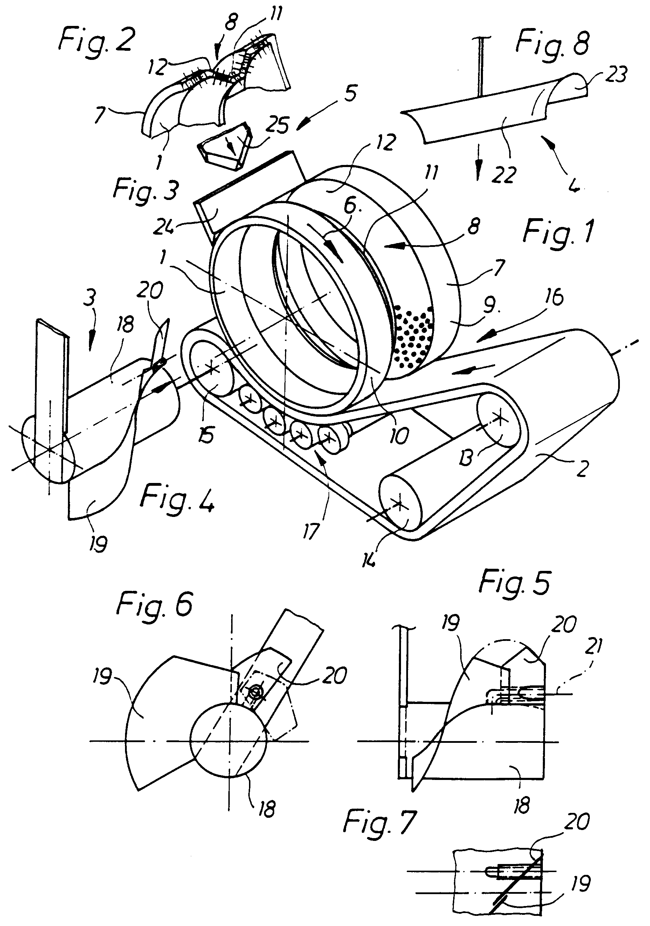

Grundlage des erfindungsgemäß modifizierten Konzeptes ist ein Separator, der nach dem Hohltrommel-Preßband-Prinzip arbeitet. Dieser umfaßt entsprechend Fig. 1, in einem aus Gründen der Übersichtlichkeit nicht gezeigten Gestell untergebracht, im wesentlichen eine Hohltrommel 1 , ein Preßband 2 , eine Ausräumeinrichtung 3 , eine Leitvorrichtung 4 und eine Abstreitvorrichtung 5 .

Die Hohltrommel 1 ist einseitig offen und auf geeignete Weise in Richtung des Pfeiles 6 umlaufend angetrieben. Sie weist eine zylindrische Mantelfläche 7 auf, die durch eine sich radial umlaufend ersteckende Nut 8 unterbrochen ist, so daß die zylindrische Mantelfläche 7 in zwei zylindrische Endbereiche 9, 10 zerfällt. Die Nut 8 hat Dreieckquerschnitt, wobei der Nutgrund 11 durch eine schmale Zylinderfläche gebildet ist. Die Endbereiche 9,10 , der Nutgrund 11 und die Nutenflanken 12 sind im Gesamtumfang perforiert.

Das Preßband 2 ist endlos ausgeführt und auf geeignete Weise mit der Hohltrommel 1 synchron umlaufend angetrieben. Es ist in seiner Dickendimension hoch elastisch und in seiner Längendimension biegsam, aber weitgehend unelastisch und wird über Umlenkwalzen 13, 14, 15 so geführt, daß die Preßbandoberfläche dieHohltrommel 1 auf einem Teil ihres Umfanges umschlingt. Dabei bildet das Preßband 2 mit der Mantelfläche 7 der Hohltrommel 1 einen Einzugkeil 16. Die Umlenkwalze 15 im Endbereich der Umschlingung ist als Anpreßwalze ausgebildet, die bezüglich ihres Abstandes zu der Hohltrommel 1 einstellbar ist. Zwischen der Anpreßwalze 15 und dem Einzugkeil 16 sind Anpreßmittel 17 angeordnet, die aus einer Reihe von Walzen bestehen, die das Preßband 2 zusätzlich zu dem Anpreßdruck aus der Preßbandspannung stützen, wobei die Stützung zunächst nur in den Randbereichen des Preßbandes 2 und in Richtung auf die Umlenkwalze 15 zunehmend über die ganze Breite des Preßbandes 2 erfolgt.

Die Ausräumeinrichtung 3 umfaßt eine stationäre Förderschnecke 18 mit einem schraubenförmig gewundenen Steg 19 . Die Förderschnecke 18 ist in die Hohltrommel 1 einschiebbar ausgeführt, wobei in Aktivstellung zwischen dem Steg 19 und der Innenkontur der Hohltrommel 1 ein im wesentlichen gleichmäßigen Spalt belassen bleibt. Dazu ist der vordere Teil 20 des Steges 19, d. h. der Teil, der dem Innenbereich der Hohltrommel 1 zugeordnet ist, der hinter der durch die Nut 8 erzeugten Einschnürung liegt, um einen Achsschenkel 21 gegen den Uhrzeigersinn schwenkbar gelagert. Der Achsschenkel 21 ist dabei so angeordnet, daß sich der Teil 20 des Steges 19 innerhalb eines Hüllkreises umklappen läßt, der kleiner ist als der kleinste Innendurchmesser der Hohltrommel 1.

Die Leitvorrichtung 4 weist ein Führungselement 22 auf das im Bereich vor dem Einzugkeil 16 mit dem Preßband 2 einen tunnelförmigen Leitkanal 23 bildet, der auf die Nut 8 ausgerichtet ist und dessen Querschnitt im wesentlichen dem der zu bearbeitenden Knochenstränge entspricht. Die Abstreifvorrichtung 5 (sh. Fig. 3) umfaßt eine erste, über die gesamte Länge der Hohltrommel 1 reichende und mit deren Mantelfläche 7 in Kontakt tretende Abstreifklinge 24 , deren Wirksamkeit sich lediglich auf die Endbereiche 9, 10 der Hohltrommel 1 erstreckt, und eine zweite Abstreifklinge 25 , die in Drehrichtung der Hohltrommel 1 vor der Abstreifklinge 24 angeordnet ist und deren Wirksamkeit auf den Bereich der Nut 8 beschränkt ist. Beide Abstreifklingen 24 und 25 sind an die Mantelfläche 7 anstellbar ausgeführt und stehen in der Kontaktstellung unter einstellbarer Federlast.

Für den bestimmungsgemäßen Betrieb des vorbeschriebenen Separators werden jeweils in Pfeilrichtung die Ausräumeinrichtung 3 in den Innenraum der Hohltrommel 1 eingeschoben, die Leitvorrichtung 4 auf kurze Distanz zu dem Preßband 2 gebracht und die Abstreifvorrichtung in Kontaktstellung mit der Mantelfläche 7 der Hohltrommel 1 gefahren. Zum einschieben der Ausräumeinrichtung 3 wird der vordere Teil 20 des Steges 19 der Förderschnecke 18 in die in Fig. 6 gezeigte Phantomstellung geklappt und nach dem Einschieben durch manuellen Eingriff wieder aufgestellt. Der zu bearbeitende Knochenstrang wird nun in den Führungstunnel der Leitvorrichtung 4 eingeschoben, wobei die Auflage auf dem Preßband 2 erfolgt, daß die bei der Längsteilung des Tierkörpers entstandene Schnittfläche dem Preßband 2 zuweist. Aufgrund der Wirkung der Leitvorrichtung 4 ergibt sich eine Ausrichtung so, daß die Rippenstümpfe in die Nut 8 hineinragen und die Restfleisch tragenden Partien mit den Nutflanken 12 in Kontakt treten. Letzteres geschieht unter dem Anpreßdruck des Preßbandes 2 und bewirkt, daß die fließfähigen Bestandteile, d. h. das Restfleisch durch die Perforationen der Hohltrommel 1 hindurch in diese abfließen. Hier wird es mittels derAusräumeinrichtung 3 von der Innenkontur der Hohltrommel 1 abgestreift und über den schraubenförmig gewundenen Steg 19 nach außen befördert.

Der entfleischte Knochenstrang sowie eventuell freie, nicht fließfähige Rückstände gelangen nach Verlassen der Druckzone in den Bereich der Abstreifvorrichtung 5 und werden von der Mantelfläche 7 abgestreift. Dabei werden die zylinderförmigen Endbereiche 9 und 10 sowie der Bereich der Nut 8 durch Abstreifklingen 24 bzw. 25 getrennt kontrolliert, um jeweils in jedem Bereich eine individuelle Einstellung zu ermöglichen.

### Bezugszeichenliste

- 1.: Hohltrommel
- 2.: Preßband
- .: Ausräumeinrichtung
- 4.: Leitvorrichtung
- 5.: Abstreifeinrichtung
- 6.: Pfeil
- 7.: Mantelfläche
- 8.: Nut
- 9.: Endbereich
- 10.: Endbereich
- 11.: Nutgrund
- 12.: Nutflanke
- 13.: Umlenkwalze
- 14.: Umlenkwalze
- 15.: Umlenkwalze
- 16.: Einzugkeil
- 17.: Anpreßmittel
- 18.: Förderschnecke
- 19.: Steg
- 20.: vorderer Teil
- 21.: Achsschenkel
- 22.: Führungselement
- 23.: Leitkanal
- 24.: Abstreifklinge
- 25.: Abstreifklinge

## Patentansprüche

1. Separator zur Durchführung eines Verfahrens zum Gewinnen des Restfleisches von den Knochen von Karbonadensträngen geschlachteter Warmblüter, insbesondere von Schweinen, mit einer umlaufend angetriebenen einseitig offenen Hohltrommel (1) mit perforierter Mantelfläche (7) , einem elastischen, endlosen Preßband (2) , welches mit seiner Außenfläche die Hohltrommel (1) auf einem Teil ihres Umfanges umschlingt und einen Einzugkeil (16) für das Preßgut und unter Wirkung von Anpreßmitteln (17) eine Preßzone bildend geführt ist, sowie mit einer Ausräumeinrichtung (3) im Innenraum der Hohltrommel (1) und einer deren äußerer Mantelfläche (7) zugeordneten Abstreifvorrichtung (5), **dadurch gekennzeichnet,** daß die Hohltrommel (1) mindestens eine deren Mantelfläche (7) unterbrechende und sich radial umlaufend erstreckende Nut (8) aufweist, deren Querschnitt der Querschnittsform des Knochenstranges der zu bearbeitenden Karbonadenstränge im wesentlichen entspricht

2. Separator nach Anspruch 1, **dadurch gekennzeichnet**, daß die Mantelfläche (7) der Hohltrommel (1) wenigstens im Bereich der Nut (8) von Perforationen durchsetzt ist.

3. Separator nach Anspruch 1 oder 2 mit einer Ausräumeinrichtung (3) in Form einer in den Innenraum der Hohltrommel (1) von deren offener Seite her einführbaren Förderschnecke (18) mit mindestens einem schraubenförmig gewundenen, der Innenkontur der Hohltrommel (1) angepaßten Steg (19), **dadurch gekennzeichnet,** daß der vorausweisende Teil (20) des Steges (19) gegen die Drehrichtung der Hohltrommel (1) in einen Hüllkreis bringbar ist, dessen Durchmesser kleiner ist als der kleinste Innendurchmesser der Hohltrommel (1) .

4. Separator nach einem der Ansprüche 1 bis 3, **dadurch gekennzeichnet,** daß unmittelbar vor dem Einzugkeil (16) eine Leitvorrichtung (4) zum positonsgenauen Zuführen der Knochenstränge in bezug auf die Lage der Nut (8) in der Mantelfläche (7) der Hohltrommel (1) angeordnet ist.

## Claims

1. Separator for carrying out a method for obtaining residual meat from the bones of strips of chops of slaughtered warm-blooded animals, especially of pigs, comprising a rotationally driven hollow drum (1), which is open at one end, with perforated circumferential surface (7), a resilient, endless press belt (2), which loops by its outer surface around the hollow drum (1) over a part of the circumference thereof and is guided to form a wedge intake (16) for the stock to be pressed and, under the action of pressing means (17), a press zone, as well as a cleaning-out device (3) in the interior of the hollow drum (1) and a stripper device (5) associated with the outer circumferential surface (7) thereof, characterised thereby that the hollow drum (1) has at least one radial encircling groove (8) which interrupts the circumferential surface (7) thereof and the cross-section of which substantially corresponds with the cross-sectional shape of the bone strip of the strips of chops to be processed.

2. Separator according to claim 1, characterised thereby that the circumferential surface (7) of the hollow drum (1) is penetrated by perforations at least in the region of the groove (8).

3. Separator according to claim 1 or 2 with a cleaning-out device (3) in the form of a conveyor worm (18), which is introducable into the interior of the hollow drum (1) from the open end thereof, with at least one helically wound web (19) matched to the internal profile of the hollow drum (1), characterised thereby that the forwardly facing part (20) of the web (19) can be brought into an envelope circle, the diameter of which is smaller than the smallest inner diameter of the hollow drum (1), against the rotational direction of the hollow drum (1).

4. Separator according to one of claims 1 to 3, characterised thereby that a guide device (4) for positionally exact feeding of the bone strips in relation to the position of the groove (8) in the circumferential surface (7) of the hollow drum (1) is arranged directly in front of the wedge intake (16).

## Revendications

1. Séparateur pour mettre en oeuvre a procédé de récupération de la chair résiduelle des os de cordons de côtelettes d'animaux à sang chaud abattus, en particulier de porcs, comportant un tambour creux (1) ouvert sur a côté, entrainé en rotation, ayant une surface d'enveloppe (7) perforée, une bande de pressage sans fin élastique (2), qui enlace, par sa surface extérieure, le tambour creux (1) sur une partie de sa périphérie, et un coin d'introduction (16) pour le produit à presser, et qui est guidé, en formant une zone de pressage, sous l'action de moyens de pressage (17), et comportant un dispositif de dégarnissage (3), placé dans l'espace intérieur du tambour creux (1), et un dispositif de raclage (5) associé à sa surface d'enveloppe (7) extérieure, caractérisé en ce que le tambour creux (1) présente au moins une gorge (8), interrompant sa surface d'enveloppe (7) et s'étendant radialement sur une circonférence, gorge dont la section transversale correspond sensiblement à la forme de la section transversale du cordon d'os des cordons de côtelettes à travailler.

2. Séparateur selon la revendication 1, caractérisé en ce que la surface d'enveloppe (7) du tambour creux (1) est traversée par des perforations au moins dans la zone de la gorge (8).

3. Séparateur selon la revendication 1 ou 2, comportant un dispositif de dégarnissage (3) sous la forme d'une vis transporteuse sans fin (18) pouvant être introduite dans l'espace intérieur du tambour creux (1), depuis son côté ouvert, et ayant au moins une nervure (19) torsadée en hélice et adaptée au profil intérieur du tambour creux (1), caractérisé en ce que la partie (20) tournée vers l'avant de la nervure (19) est susceptible de se placer dans un cercle d'enveloppe, en évoluant dans le sens inverse du sens de rotation du tambour creux (1), cercle d'enveloppe dont le diamètre est inférieur au diamètre intérieur minimal du tambour creux (1).

4. Séparateur selon l'une des revendications 1 à 3, caractérisé en ce qu'un dispositif de guidage (4), destiné à amener en position précise les cordons d'os par rapport à la position de la gorge (8) réalisée dans la surface d'enveloppe (7) du tambour creux (1), est disposé directement en amont du coin d'introduction (16).
